# EUROPEAN PATENT SPECIFICATION

(11) **EP 2 849 406 B1**
(45) Date of publication and mention of the grant of the patent: **21.08.2019**
(21) Application number: 14185042.0
(22) Date of filing: 17.09.2014
(51) Int. Cl.: H04L 29/06, H04L 29/08

(54) **Push-to-talk service**
Push-to-Talk-Dienst
Service de messagerie vocale instantanée

(30) Priority: 17.09.2013 FI 20135932
(43) Date of publication of application: 18.03.2015
(73) Proprietor: Airbus Defence and Space Oy, 00380 Helsinki (FI)
(72) Inventor: Pichna, Roman, 00380 Helsinki (FI); Kolesnikov, Dmitry, 01480 Vantaa (FI); Lahtinen, Olli-Pekka, 00380 Helsinki (FI)
(74) Representative: Kolster Oy Ab

(56) References cited:
- EP-A1- 1 901 481
- WO-A1-2008/145193
- US-A1- 2012 134 352

## Description

### FIELD

The present invention relates to push-to-talk service.

### BACKGROUND ART

A push-to-talk (PTT) service provides direct voice communication with the push of a key with one person or with a group of people. While the PTT service originates from Professional Mobile Radio (PMR) networks, that is mobile communication networks for special groups of users, for example, for police, fire brigade and medical personnel, PTT service has been introduced also in commercial (public) networks. In the commercial (public) networks, the PTT service has been implemented by means of operating system -specific applications or proprietary solutions, whereas in traditional PMR networks the service has been implemented as a communication system -specific feature.

Current trends include migration of traditional systems to advanced systems with backward compatibility and a single user using several different mobile apparatuses. Further, operation systems and platforms in mobile apparatuses evolve all the time. That creates challenges to a PTT service provider and causes extra work load, for example PTT clients need to be programmed and tested for each platform since the PTT application should work over different platforms for a user wanting to use the PTT service with any of his/her mobile apparatuses regardless of the operation system of the platform.

EP 1901481 discloses a solution in which a new entity, called general service management entity, is added to a network, the general service management entity communicating with a general client in a user apparatus, using protocol supported by the client, and with an application server providing service the client has requested for, using protocol supported by the application server. Examples of services accessible via the general service management entity include PoC (PTT over cellular), presence service, conference service, and messaging service.

US 2012/134352 discloses a solution in which a user uses a standard Internet browser in a user terminal to obtain access to a web PTT client in a host website in a server. The web PTT client in turn, communicates with a web PTT server using standard PTT procedures and communications.

WO 2008/145193 discloses to use a gateway via which a data terminal, like a laptop, can access IP Multimedia System IMS and PTT services, including PTT-based content exchange services, without requiring installation of any dedicated application onto the data terminal.

### SUMMARY

Various aspects of the invention comprise methods, a computer program product, an apparatus and a system as defined in the independent claims. Further embodiments of the invention are disclosed in the dependent claims. An aspect of the invention comprises providing the PTT service as a web service. An advantage of the aspect includes that such a PTT service is platform-independent.

### BRIEF DESCRIPTION OF THE DRAWINGS

In the following, exemplary embodiments will be described in great er detail with reference to accompanying drawings, in which
Figure 1 shows simplified architecture of a system and block diagrams of some apparatuses according to an exemplary embodiment;
Figure 2 is a flow chart illustrating an exemplary functionality;
Figures 3 and 4 are flow charts illustrating exemplary signalling; and
Figure 5 is a block diagram of an exemplary apparatus.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any wideband, broadband and narrowband access based network or system or a user apparatus or a server apparatus, or any corresponding component that is configured to support at least principles of a web service, i.e. a method of communication between a web browser or a corresponding dedicated web client and a web server apparatus over the Internet. Such a network/system/user apparatus/server apparatus may be based on a wireless communication system or a communication system utilizing both fixed networks and wireless networks providing Internet Protocol (IP) connectivity service. Examples of such access networks/systems include Terrestrial Trunked Radio Access (TETRA), TETRA Enhanced Data Service (TEDS), TETRAPOL, DMR (digital mobile radio) systems, a PAMR network (Public Access Mobile Radio), and a 2nd, 3rd or 4th, or beyond, generation mobile network, like LTE (Long Term Evolution), WiMAX (Worldwide Interoperability for Microwave Access), WLAN (Wireless Local Area Net-work), like WiFi, and systems providing delivery of data over Internet Protocol (IP) networks, such as the Internet.

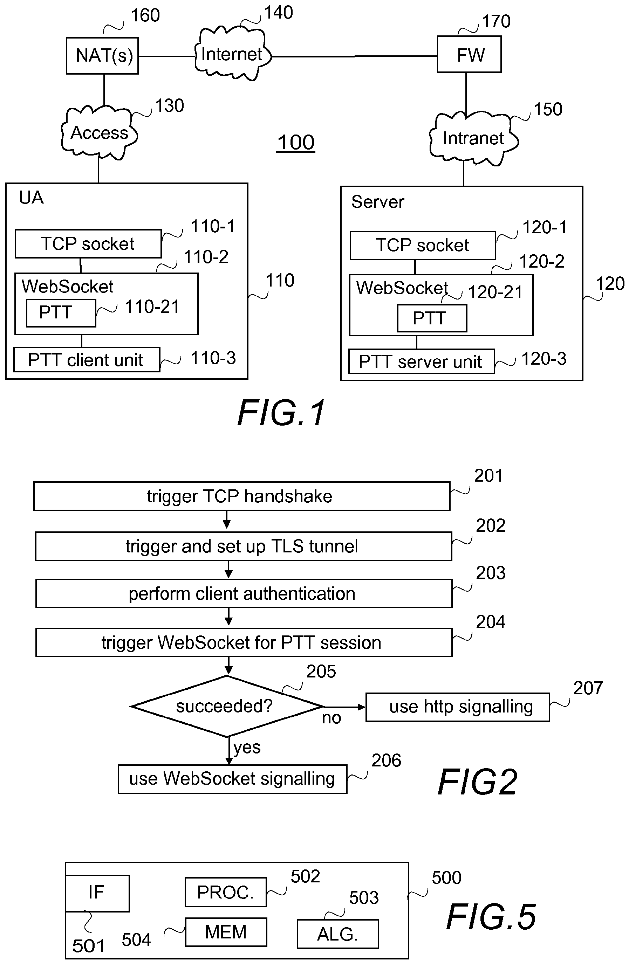

Figure 1 illustrates an exemplary system 100 in which the PTT service is provided by a remote server. The exemplary system 100 comprises an access network 130 serving a first end user apparatus (i.e. a client device) 110, one or more networks 140 (only one is illustrated in Figure 1), wherein each network may be any kind of a communications network or Internet service provider network, etc., and an Intranet 150 of the PTT service provider, the Intranet 150 serving a server apparatus 120 providing the PTT service as a web page. The access network 140 is connected via one or more NAT (Network Address Translation) devices (routers) 160 to the one or more networks 140. The Intranet 150 is connected to the one or more networks 140 via a firewall device 170. Herein a NAT device covers also NAPT (Network Address and Port Translation) devices. However, it should be appreciated that the connection between the end user apparatus 110 and the server apparatus 120 may be different of what is disclosed and they may be connected to each other even without any network between. Further, the NAT devices and the firewall device are illustrated in Figure 1 just to describe some devices the below described messages traverse. Therefore the NAT/NAPT device and the firewall device are not discussed in more detail herein. Further, it is obvious to a person skilled in the art that the system may also comprise other functions and structures that need not be described in greater detail here, like different proxies; the more detailed structure of the system is irrelevant to the actual invention.

In the illustrated example, the end user apparatus 110 is configured to act as a PTT service web browser (client) that is configured to use WebSocket as a protocol for providing information exchange in the PTT web service. The end user apparatus 110 comprises at least one TCP socket 110-1, a WebSocket unit 110-2 configured to communicate via the TCP socket 110-1 towards the access network 130, and a PTT client unit 110-3, the WebSocket unit comprising at least a PTT protocol 110-21 for the PTT service, or more precisely for the PTT client unit (PTT application). Typically, but not necessarily, the WebSocket unit comprises also other protocols, such as a protocol for a short message service (SMS). The TCP socket used for transporting HTTP may use TCP port number 80 or port number 443, for example. The PTT client unit comprises a PTT application built in the illustrated example on top of WebSocket protocol.

The end user apparatus 110 refers to a computing device (equipment). Such computing devices (apparatuses) include wireless mobile communication devices operating with or without a subscriber identification module in hardware or in software, including, but not limited to, the following types of devices: mobile phone, smart-phone, personal digital assistant (PDA), handset, laptop and/or touch screen computer, e-reading device, tablet, game console, notebook, multimedia device, a handheld radio terminal, a so called fixed radio apparatus in a vehicle, a dispatching workstation that may communicate over a fixed connection and/or wirelessly and a personal computer, or a corresponding apparatus communicating over a fixed connection.

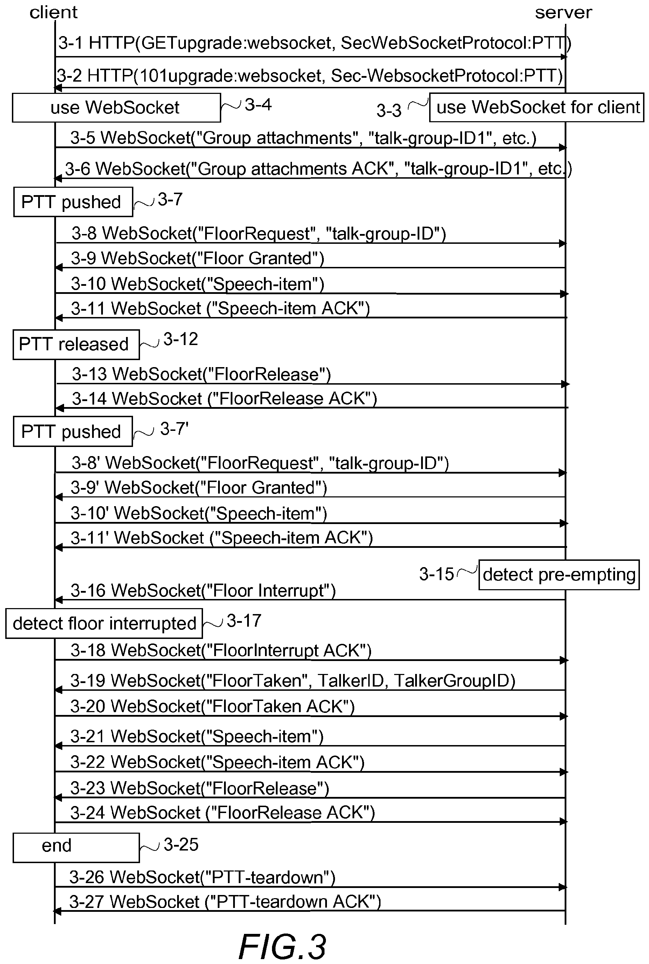

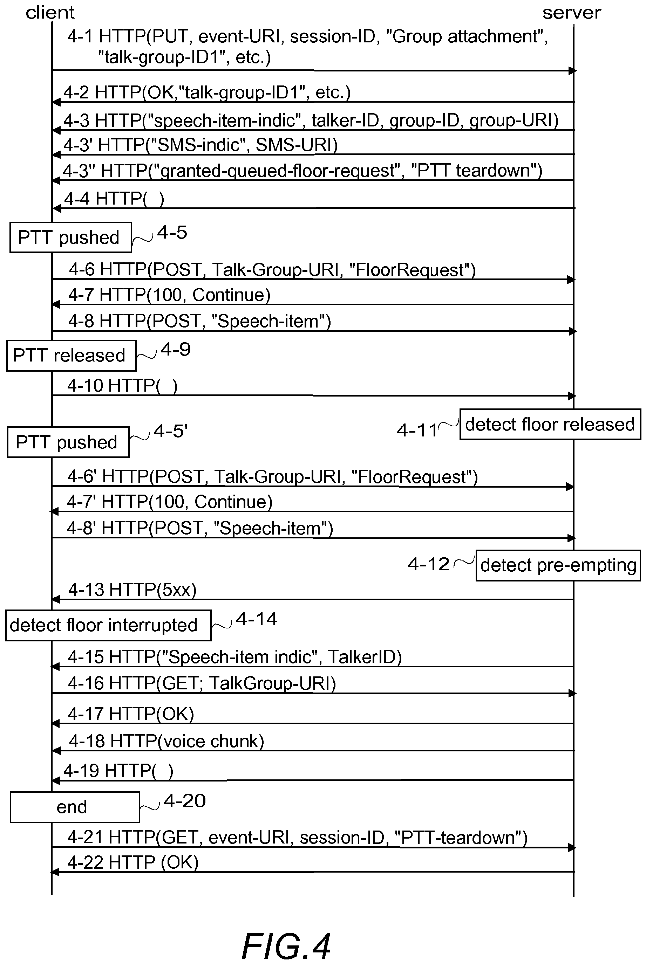

In the illustrated example, a server apparatus 120 is configured to act as a WebSocket PTT server and to provide the PTT service as a web page. The server apparatus (server) 120 comprises least one TCP socket 120-1, a WebSocket unit 120-2 configured to communicate via the TCP socket 120-1 towards the Intranet 150, and a PTT server unit 120-3, the WebSocket unit comprising at least a PTT protocol 130-21 for the push-to-talk service, or more precisely for the PTT server unit (PTT server application). The PTT server unit comprises a PTT application built on top of HTML5 (HyperText Markup Language version 5) web server. The TCP socket may be an HTTP port number 80 or port number 443, for example. If the server apparatus 150 is configured to act as multiple different servers, the WebSocket may comprise protocols for corresponding server services. It should be appreciated that the PTT server apparatus may comprise other units for the actual push-to-talk service, like memory for storing different PTT events that are described, as new information elements for the used protocol, in more detail with Figures 3 and 4, for example. A PTT event may be a PTT instruction, PTT control information, a PTT request and/or a PTT response and/or a PTT event may convey an announcement of the PTT service.

The server apparatus 120 refers to a one or more computing devices (equipment) configured to contain the PTT server component (unit) which takes cares of floor requests and delivery of received speech items. Such computing devices (apparatuses) include, but are not limited to, the following types: personal computer, a workstation, a distributed computing system, a cloud computing device, a computer cluster, an embedded system, a networking device, a mobile device, or a combination of any two or more of these devices.

In another example that uses HTTP as a protocol for providing information exchange in the PTT web service, the WebSocket units in the end user apparatus and in the server are replaced with corresponding HTTP units comprising the PTT protocol, in which case the PTT application is built on top of HTTP. Further, it should be appreciated that the server and/or the end user apparatus may comprise the WebSocket unit and a corresponding HTTP unit.

Figure 2 illustrated functionality of the user apparatus, or more precisely a PTT client unit, according to an exemplary embodiment in which handshaking utilizes HTTP protocol, and the PTT client unit is configured to use HTTP as a backup protocol to the WebSocket protocol.

Referring to Figure 2, as usual in web services, the PTT client unit triggers in step 201 a TCP (Transmission Control Protocol) 3-way handshake, as is described in Engineering Task Force (IETF) standard (Request for comments) RFC763, to set up a TCP-connection. TCP provides reliable, ordered, error-checked delivery of a stream between programs running on computers connected to a local area network, Intranet or the Internet, and TCP is used by web browsers when they connect to servers. The handshake procedure is triggered by the user apparatus sending a message SYN, to which an acknowledgement is received (SYN-ACK), which the user apparatus acknowledges by sending ACK.

In the illustrated example, the user apparatus then starts to set up, and sets up in step 202 a TLS (Transport Layer Security) tunnel to the PTT server using TLS protocol described in Engineering Task Force (IETF) standard (Request for comments) RFC5246. This step may be interpreted to be a server authentication step. The TLS protocol allows client/server applications to communicate in a way that is designed to prevent eavesdropping, tampering, or message forgery. In other words, the TLS protocol provides connection security that has three basic properties: a peer's identity can be authenticated using asymmetric, or public key, cryptography; the negotiation of a shared secret is secure; and the negotiation is reliable. The TLS tunnel is an encrypted tunnel between the PTT client unit and the PTT server unit, thereby providing an additional layer of security and implied proxy traversal. Thanks to the encrypted TLS tunnel a proxy or any other device/apparatus on the path automatically forwards the signaling transparently since it cannot see what the encrypted HTTP or WebSocket signaling contains inside of the encrypted TLS tunnel and therefore cannot do more than forward data. A further feature of TLS is that it is application protocol independent. It should be appreciated that other protocols providing similar connection security, like Secure Sockets Layer protocol that is a proprietary predecessor of the IETF standardized TLS, may be used instead of the TLS handshake protocol.

In the illustrated example, the user apparatus then performs in step 203 a client authentication. The client authentication includes the user apparatus triggering the client authentication by sending an empty HTTP GET to the server, receiving from the server an authentication request HTTP (4xx: Authentication Required, nonce), responding to the request by sending a message HTTP (GET, digest) and receiving an acceptance message HTTP (OK, session-ID) indicating that the client has been authenticated and containing a session identifier for the communication.

Then in step 204 the user apparatus triggers the WebSocket protocol for the PTT session. This is performed by sending a message HTTP (GET, session-ID, upgrade:websocket, Sec-WebSocket-Protocol:PTT). If the use of the WebSocket protocol succeeded (step 205), i.e. a response message HTTP (101, upgrade:websocket, Sec-WebSocket-Protocol:PTT) is received, the user apparatus uses in step 206 the WebSocket protocol for signaling for the PTT service, as will be described in more detail with Figure 3. If the use of the WebSocket protocol did not succeed (step 205), i.e. a response message HTTP (4xx) is received, the user apparatus uses in step 207 HTTP for signaling for the PTT service, as will be described in more detail with Figure 4. For example, a response message HTTP (4xx), which indicates a bad request, may be received because between the PTT client unit and the PTT server unit there is a proxy element not supporting the WebSocket protocol.

In other implementations at least one of the TSL tunnel set up (step 202) and the client authentication (step 203) and the triggering WebSocket for the PTT session (steps 204-206) or the use of HTTP signaling (step may 207) be omitted. In other words, it is not necessary to perform the steps ensuring security, and the PTT application may be built to use mere HTTP for the PTT service or the PTT application may be built to use mere WebSocket protocol for the PTT service.

As is evident from the above, the PTT client unit, or a corresponding application, may run as a browser plug-in which has the advantage that the PTT client unit may be updated easily and each time an update is needed.

Figure 3 illustrates how the PTT service is provided as a web service by using the WebSocket protocol. The WebSocket is protocol is a non-HTTP network protocol for providing bi-directional, full-duplex communications channels over a single Transmission Control Protocol (TCP) socket that uses HTTP as a handshake protocol. The WebSocket protocol is described in more detail in Internet Engineering Task Force (IETF) standard (Request for comments) RFC 6455: The WebSocket protocol, December 2011, without restricting the invention to the such a specific solution. A WebSocket connection between a client device and a server typically disconnects only after the session between the server and the client device is completed, not after the server has sent a response to a request received from the client device.

The example illustrated in Figure 3 illustrates information elements used in the WebSocket protocol for PTT. Figure 3 starts from step 204, i.e. where at least the TCP connection for the PTT session is established. To switch from HTTP to the WebSocket, the client in the user apparatus sends message 3-1 HTTP GET for upgrading to the WebSocket, the message containing as a new information element PTT (push-to-talk) indicating that the WebSocket protocol is targeted to the PTT application. The upgrading request is received by the PTT server unit, which responds in the illustrated example by message 3-2 HTTP 101 accepting the upgrade, message 3-2 containing as a new information element PTT indicating that the WebSocket protocol is targeted to the PTT application. Then both the server (point 3-3) and the client (3-4) determines that the WebSocket protocol is used for PTT service, and the WebSocket session is available.

As a next step, a selection and attachments to talk groups is performed. In the illustrated example the selection and attachments originates from the client who sends message 3-5 containing as a new information element "Group attachments" and then one or more talk group identifiers of talk groups the user has selected to attach or is indicated in user settings, for example. In the illustrated example, the server confirms the group attachments by sending in response message 3-6 a new information element "Group attachments ACK" and then talk group identifiers of the groups to which the attachments was accepted. The list in message 3-6 may contain less identifiers than the list in message 3-5. Naturally, instead of accepting the group attachments, a negative acknowledgement "Group attachments NACK" may be sent. For example, the negative acknowledgement may be sent when message 3-5 contains only one group and the group is not stored as part of the user profile in the server side. It should be appreciated that instead of the client, the server may send message 3-5 and then the client sends the response message 3-6.

Then the user of the user apparatus comprising the client pushes a button (push-to-talk button) for obtaining a permission to speak in a group the user is currently actively listening. In response to detecting in point 3-7 that the PTT is pushed, the client sends message 3-8 containing as a new information element "Floor request" and a talk group identifier of the group. In this example the server grants the floor, i.e. gives a permission to speak, and sends message 3-9 containing as a new information element "Floor granted". Instead of the "Floor granted", the new information element may be "Queued" or "Rejected". Since the floor was granted, the user starts to speak, and the speech is transmitted in one or more messages 3-10 containing a "speech item" as a new information element, the speech item being encoded from the speech of the user, the amount of messages depending how long the user speaks, for example. In the illustrated example the server is configured to acknowledge the speech item by message 3-11, containing as a new information element "Speech Item ACK". However, in some other embodiment the server is configured not to acknowledge the speech item messages 3-10. Then the user releases the PTT button which is detected in point 3-12, and therefore the client sends message 3-13 that contains as a new information element "Floor release". In the illustrated example the server is configured to acknowledge message 3-13 by message 3-14 that contains as a new information element "Floor release ACK". However, in some other embodiment the server is configured not to acknowledge the floor release message 3-13. Now the server may grant the floor to someone else in the group who is queuing for the floor, for example.

In the illustrated example, no one is speaking and the user wants to speak again and pushes the button. In response to detecting in point 3-7' that the PTT is pushed, the client sends message 3-8' corresponding to message 3-8. In this example the server grants the floor, i.e. gives a permission to speak, and sends message 3-9' corresponding to message 3-9. Following messages 3-10' and 3-11' correspond to messages 3-10 and 3-11, correspondingly.

However, the server detects in point 3-15 a pre-empting communication, i.e. communication having a higher priority and therefore sends message 3-16 to the client, message 3-16 containing as a new information element "Floor interrupt". The client detects in point 3-17 that the floor is interrupted, i.e. permission to speak is withdrawn, and acknowledges the information by sending message 3-18 that contains as a new information element "Floor interrupt ACK". Further, the client may be configured to output a visible or audible indication for the user to be aware that his/her speech is not any more transmitted to other group members. In some other embodiment the client is configured not to acknowledge the floor interrupt message 3-16.

Then the communication continues by the server sending message 3-19 indicating that there is now a new speaker, the message containing as a new information element "Floor taken", and a talker identifier identifying the group member who is talking, and the talk group identifier. In the illustrated example the client is configured to acknowledge message 3-19 by message 3-20 that contains as a new information element "Floor taken ACK". However, in some other embodiment the client is configured not to acknowledge the floor taken message 3-20. Then the server sends one or more messages 3-21, each message containing as a new information element "Speech item", and possibly also the talker identifier and the group identifier. The client receives the speech items in message(s) 3-21, decodes them and outputs to the user. Further, in the illustrated example the client is configured to acknowledge message 3-21 by message 3-22 that contains as a new information element "Speech item ACK". However, in some other embodiment the client is configured not to acknowledge the speech item message 3-21.Then the pre-empting group member stops speaking and releases the floor. This information is forwarded from the server to the client in message 3-23 that contains as a new information element "Floor release". In the illustrated example the client is configured to acknowledge message 3-23 by message 3-24 that contains as a new information element "Floor release ACK". However, in some other embodiment the client is configured not to acknowledge the floor release message 3-23. It should be appreciated that messages 3-19 to 3-24 correspond to messages which are received each time someone else has been granted the floor and he/she is speaking, and corresponding messages are sent by the server to other group members, when the client has been granted the floor.

In point 3-25 the client detects that the user has decided to end the use of the PTT service, and therefore sends message 3-26 sends that contains as a new information element "PTT teardown". In the illustrated example the server is configured to acknowledge message 3-26 by message 3-27 that contains as a new information element "PTT teardown ACK". However, in some other embodiment the server is configured not to acknowledge the PTT teardown message 3-26.

Although not illustrated in Figure 3, when there is a WebSocket session for the PTT service, the session may be used for sending and/or receiving instant messages, short data service messages, short messages, status messages, and corresponding messages.

Figure 4 illustrates how the PTT service is provided by using the HTTP protocol, either as a backup for the WebSocket protocol or as the only way to provide the PTT service as a web service.

If the HTTP protocol is used as a backup, Figure 4 starts from step 207, i.e. where the upgrade to the WebSocket protocol did not succeed. If mere HTTP protocol is used to provide the PTT service, then Figure 4 starts, depending on an implementation after a TCP connection has been established between the client (web browser) in the user apparatus and the server, or after a TSL tunnel has been established, or after the client is also authenticated.

As a first step in taking the PTT service in use a selection and attachments to talk groups is performed. In the illustrated example the selection and attachments originates from the client who uses the PUT method of HTTP in message 4-1 that contains one or more event uniform resource identifiers (URIs) and session identifiers, an event URI identifying a web resource, and in the illustrated example also a new information element "Group attachments" and then one or more talk group identifiers of talk groups the user has selected to attach or which are(is) indicated in user settings. The server confirms the group attachments by sending message 4-2 comprising OK and then talk group identifiers of the groups to which the attachments was accepted. The list in message 4-2 may contain less identifiers than the list in message 4-1, and an absence of a talk group identifier in message 4-2 indicates a negative acknowledgement for the talk group. In another implementation attaching to groups is performed by using the GET method of HTTP separately for each group the user wants attach to. It should be appreciated that instead of the client, the server may send message 4-1 and then the client sends the response message 4-2.

In the illustrated example, the server sets up a downlink event flow by means of messages 4-3, 4-3', 4-3" conveying to the client announcements for the PTT service. The announcement include speech item indication, talker identifier, group identifier, group URI, granted-queued-floor-request and PTT teardown as new information elements, and in the illustrated example also SMS indication and SMS URI. In addition to the SMS URI, or instead of the SMS URI, the announcement may include SMS (not illustrated in Figure 4). For example, the granted-queued-floor-request indicates that if you have requested the floor but it is not yet available, you will be given the floor as soon as possible. After the announcements, an empty data chunk is sent in message 4-4 to indicate that the event flow ends.

Then the user of the user apparatus comprising the client pushes a button (push-to-talk button) for obtaining a permission to speak in a group the user is currently actively listening. In response to detecting in point 4-5 that the PTT is pushed, the client uses the POST method of the HTTP and sends message 4-6 containing a talk group's URI, and as a new information element "Floor request". In the illustrated example message 4-6 contains a talk group identifier of the group but the message may be sent without it as well. In this example the server grants the floor, i.e. gives a permission to speak, and sends message 4-7 the "100, continue" indicating that the floor is granted. If the message is HTTP 4xx, it indicates that the request is rejected. If no response is received before a time out, it is assumed that the floor request is queued, and that a permission to speak will be received. It should be appreciated that the time out may be application-specific, i.e. specific for PTT, or a general time out, or a common time out for some applications. Since the floor was granted, the user starts to speak, and the speech is transmitted in one or more messages 4-8 using the POST method and containing a "speech item" as a new information element, the speech item being encoded from the speech of the user, the amount of messages depending how long the user speaks, for example. Message 4-8 may contain as an additional element the talk group's identifier. Then the user releases the PTT button, the release is detected in point 4-9, and therefore the client sends an empty data chunk in message 4-10. In response to the empty message, the server detects in point 4-11 that the floor is released. Now the server may grant the floor to some other group member who is queuing for the floor, for example.

In the illustrated example, as in the example of Figure 3, no one is speaking and the user wants to speak again and pushes the button. In response to detecting in point 4-5' that the PTT is pushed, the client sends message 4-6' corresponding to message 4-6. In this example the server grants the floor, i.e. gives a permission to speak, and sends message 4-7' corresponding to message 4-7. Following message 4-8' correspond to message 4-8.

However, the server detects in point 4-12 a pre-empting communication, i.e. communication having a higher priority and therefore sends message 4-13 to the client. In response to receiving 5xx in message 4-13, the client detects in point 4-14 that the floor is interrupted, i.e. permission to speak is withdrawn. Further, the client may be configured to output a visible or audible indication for the user to be aware that his/her speech is not any more transmitted to other group members.

Then the communication continues by the server sending message 4-15 indicating that there is now a new speaker, the message containing as a new information element "speech item indication", and a talker identifier identifying the group member who is talking. Message may also contain (not illustrated in Figure 4) the talk group identifier and/or the talk group URI. The client is configured to respond by message 4-16 that uses the GET method and contains the talk group URI. Message 4-16 may contain as a new information element talk group identifier. The server acknowledges message 4-16 by message 4-17 and then sends one or more messages 4-18, each containing a "voice chunk" as a new information element, the speech item being encoded from the speech of the user to one or more voice chunks, the amount of messages depending how long the user speaks, for example. Although not illustrated, message(s) 4-18 may contain as an additional element talk group's identifier. The client receives the speech items in message(s) 4-18, decodes them and outputs to the user. In other words, a long speech item can be split to several voice chunks that are sent and played to others while the speaker is still speaking. Then the pre-empting group member stops speaking and releases the floor. Therefore the server sends an empty data chunk in message 4-19 to the client to inform the client that the floor is released. It should be appreciated that messages 4-15 to 4-19 correspond to messages which are received each time someone else has been granted the floor and he/she is speaking, and corresponding messages are sent by the server to other group members, when the client has been granted the floor.

In point 4-20 the client detects that the user has decided to end the use of the PTT service, and therefore sends message 4-21 using the GET method and containing the event URI, the session identifier, and as a new information element "PTT teardown". The server acknowledges message 4-20 by message 4-21 (HTTP OK).

Although not illustrated in Figure 4, the PTT service may be used for sending and/or receiving short messages. For example the client may send a message "HTTP (POST talk group URI (SMS))", which is acknowledged by the server sending a message "HTTP(ACCEPTED, SMS_status_URI)" indicating where to fetch the delivery report. The delivery report may be obtained by message "HTTP (GET SMS_status_URI)" which is acknowledged by "HTTP(OK)" message , and the delivery report is delivered to the client from the server in a message "HTTP ("SMS delivery report")". Corresponding information exchange may be used for sending status messages and other messages.

It should be appreciated that instead of sending an empty data chunk to indicate end of a flow, a message containing a specific indication, such as "EndOfStream" may be sent.

Figure 5 is a simplified block diagram illustrating some units for an apparatus 500 configured to be either an end user apparatus or a server apparatus for the web service based PTT service, i.e. an apparatus providing at least one of the units described above and/or one or more units configured to implement at least some of the functionalities described above. In the illustrated example, the apparatus comprises one or more interfaces (IF) 501 for receiving and transmitting information, a processor 502 configured to implement at least some functionality described above with a corresponding algorithm/algorithms 503, and memory 504 usable for storing a program code required at least for the implemented functionality and the algorithms and possibly the new information elements (except speech items) and other information.

In other words, an apparatus configured to provide the end user apparatus, and/or an apparatus configured to provide the server apparatus, or an apparatus configured to provide one or more corresponding functionalities, is a computing device that may be any apparatus or device or equipment configured to perform one or more of corresponding apparatus functionalities described with an embodiment/example/implementation, and it may be configured to perform functionalities from different embodiments/examples/implementations. The unit(s) described with an apparatus may be separate units, even located in another physical apparatus, the distributed physical apparatuses forming one logical apparatus providing the functionality, or integrated to another unit in the same apparatus.

The techniques described herein may be implemented by various means so that an apparatus implementing one or more functions of a corresponding apparatus described with an embodiment/example/implementation comprises not only prior art means, but also means for implementing the one or more functions of a corresponding apparatus described with an embodiment and it may comprise separate means for each separate function, or means may be configured to perform two or more functions. For example, the units, and/or algorithms, and/or the information exchange may be software and/or software-hardware and/or hardware and/or firmware components (recorded indelibly on a medium such as read-only-memory or embodied in hard-wired computer circuitry) or combinations thereof. Software codes may be stored in any suitable, processor/computer-readable data storage medium(s) or memory unit(s) or article(s) of manufacture and executed by one or more processors/computers, hardware (one or more apparatuses), firmware (one or more apparatuses), software (one or more modules), or combinations thereof. For a firmware or software, implementation can be through modules (e.g., procedures, functions, and so on) that perform the functions described herein. Software codes may be stored in any suitable, processor/computer-readable data storage medium(s) or memory unit(s) or article(s) of manufacture and executed by one or more processors/computers.

An apparatus configured to provide the end user apparatus, and/or an apparatus configured to provide the server apparatus, and/or an apparatus configured to provide one or more corresponding functionalities, may generally include a processor, controller, control unit, micro-controller, or the like connected to a memory and to various interfaces of the apparatus. Generally the processor is a central processing unit, but the processor may be an additional operation processor. Each or some or one of the units and/or algorithms and/or information exchange described herein may be configured as a computer or a processor, or a microprocessor, such as a single-chip computer element, or as a chipset, including at least a memory for providing storage area used for arithmetic operation and an operation processor for executing the arithmetic operation. Each or some or one of the units and/or algorithms and/or information exchange described above may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions or information exchange of one or more embodiments. In other words, each or some or one of the units and/or the algorithms and/or the information exchange described above may be an element that comprises one or more arithmetic logic units, a number of special registers and control circuits.

Further, an apparatus implementing functionality or some functionality according to an embodiment/example/implementation of an apparatus configured to provide the end user apparatus, and/or an apparatus configured to provide the server apparatus, or an apparatus configured to provide one or more corresponding functionalities, may generally include volatile and/or nonvolatile memory, for example EEPROM, ROM, PROM, RAM, DRAM, SRAM, double floating-gate field effect transistor, firmware, programmable logic, etc. and typically store content, data, or the like. The memory or memories may be of any type (different from each other), have any possible storage structure and, if required, being managed by any database management system. The memory may also store computer program code such as software applications (for example, for one or more of the units/algorithms/information exchange) or operating systems, information, data, content, or the like for the processor to perform steps associated with operation of the apparatus in accordance with examples/embodiments. The memory, or part of it, may be, for example, random access memory, a hard drive, or other fixed data memory or storage device implemented within the processor/apparatus or external to the processor/apparatus in which case it can be communicatively coupled to the processor/network node via various means as is known in the art. An example of an external memory includes a removable memory detachably connected to the apparatus.

An apparatus implementing functionality or some functionality according to an embodiment/example/implementation of an apparatus configured to provide the end user apparatus, and/or an apparatus configured to provide the server apparatus, or an apparatus configured to provide one or more corresponding functionalities, may generally comprise different interface units, such as one or more receiving units for receiving user data, control information, requests and responses, for example, and one or more sending units for sending user data, control information, responses and requests, for example. The receiving unit and the transmitting unit each provides an interface in an apparatus, the interface including a transmitter and/or a receiver or any other means for receiving and/or transmitting information, and performing necessary functions so that content and other user data, control information, etc. can be received and/or transmitted. The receiving and sending units may comprise a set of antennas, the number of which is not limited to any particular number. Further, the apparatus may comprise one or more user interfaces for interaction with a user.

Further, an apparatus implementing functionality or some functionality according to an embodiment/example/implementation of an apparatus configured to provide the end user apparatus, and/or an apparatus configured to provide the server apparatus, or an apparatus configured to provide one or more corresponding functionalities, may comprise other units.

The steps, points, messages and related functions described above in Figures 2, 3 and 4 are in no absolute chronological order, and some of the steps/points may be performed simultaneously or in an order differing from the given one. Other functions can also be executed between the steps/points or within the steps/points and other messages sent between the illustrated messages. For example, messages 4-8 and 4-18 may be acknowledged, for example by HTTP 200, and when TCP is used, each message is acknowledged at TCP level. Some of the steps/points or part of the steps/points or messages can also be left out or replaced by a corresponding step/point or part of the step/point or a message. The messages are only exemplary and may even comprise several separate messages for transmitting the same information.

It will be obvious to a person skilled in the art that, as technology advances, the inventive concept can be implemented in various ways. The invention and its embodiments are not limited to the examples described above but may vary within the scope of the claims.

## Claims

1. A method comprising:
providing a user apparatus with a client dedicated for a push-to-talk service, the client being a web browser plug-in;
providing a WebSocket (110-2) in the user apparatus with a push-to-talk protocol (110-21) for the client;
establishing (204), by the client in the user apparatus, a connection for the push-to-talk service between the user apparatus and a server apparatus configured to provide the push-to-talk service, including permissions to speak and speech item delivery, as a web server application; and
using (206, 207) the established connection between the user apparatus and the server apparatus for the push-to-talk service;
triggering, by the client in the user apparatus, use of a WebSocket protocol by requesting use of the WebSocket protocol from the server apparatus;
if the use of the WebSocket protocol succeeds, using the WebSocket protocol for the push-to-talk service over the connection between the user apparatus and the server apparatus; and
if the use of the WebSocket protocol fails, using an HTTP protocol for the push-to-talk service over the connection between the user apparatus and the server apparatus.

2. A method as claimed in claim 1, further comprising receiving (3-9, 3-16, 3-19, 4-7, 4-15, 4-18), in the user apparatus from the server apparatus, events for the push-to-talk service, and providing, by the client in the user apparatus, the push-to-talk service using the received events.

3. A method as claimed in claim 1, or 2, wherein an event for the push to talk service includes at least one of the following: "Group attachments", "Floor request", "Floor granted", "Speech item", "Floor release", "Floor interrupt", "Floor taken", "PTT teardown", "Queued", "Rejected", and corresponding acknowledgements.

4. A method comprising:
providing a server apparatus with a web server application configured to provide a push-to-talk service, including permissions to speak and speech item delivery; and
using (206, 207), for push-to-talk service over a connection between the server apparatus and a user apparatus a WebSocket protocol with a push-to-talk protocol for the push-to-talk service if a requested use of the WebSocket protocol succeeds, and only if the requested use of the WebSocket protocol fails, using HTTP with events for the push-to-talk service.

5. A method as claimed in claim 4, further comprising
in response to using in the server apparatus HTTP with events for the push-to-talk web server application, sending (4-2, 4-3, 4-3', 4-3") from the server apparatus to the user apparatus the events when the user apparatus attaches to one or more talk groups for the push-to-talk service.

6. A method as claimed in claim 4 or 5, wherein an event for the push to talk service includes one of the following: "Group attachments", "Floor request", "Floor granted", "Speech item", "Floor release", "Floor interrupt", "Floor taken", "PTT teardown", "Queued", "Rejected", and corresponding acknowledgements.

7. A computer program product comprising computer program code configured to perform a method as claimed in any one of claims 1 to 6 when executed on an apparatus.

8. An apparatus comprising means for performing a method as claimed in any one of the claims 1 to 6.

9. A system (100) configured to implement a push-to-talk service as an operation system independent web service application comprising a server apparatus (120) configured to implement a method as claimed in claim 4, 5 or 6 and one or more user apparatuses (110) configured to implement a method as claimed in any of claims 1 to 3.

## Patentansprüche

1. Verfahren, umfassend:
Bereitstellen eines Benutzergerätes mit einem Client, das für einen Push-to-Talk-Dienst bestimmt ist, wobei der Client ein Webbrowser-Plugin ist;
Bereitstellen eines Websockets (110-2) im Benutzergerät mit einem Push-to-Talk-Protokoll (110-21) für den Client;
durch den Client im Benutzergerät, Herstellen (204) einer Verbindung für den Push-to-Talk-Dienst zwischen dem Benutzergerät und einer Servervorrichtung, die dafür ausgelegt ist, den Push-to-Talk-Dienst bereitzustellen, einschließlich Berechtigungen zu sprechen und Sprachelement-Lieferung, als Webserver-Anwendung; und
Verwenden (206, 207) der hergestellten Verbindung zwischen dem Benutzergerät und der Servervorrichtung für den Push-to-Talk-Dienst
durch den Client im Benutzergerät, Triggern der Verwendung eines Websocket-Protokolls durch Anfordern der Verwendung des Websocket-Protokolls von der Servervorrichtung;
wenn die Verwendung des Websocket-Protokolls erfolgreich ist, Verwenden des Websocket-Protokolls für den Push-to-Talk-Dienst über die Verbindung zwischen dem Benutzergerät und der Servervorrichtung; und
wenn die Verwendung des Websocket-Protokolls misslingt, Verwenden eines HTTP-Protokolls für den Push-to-Talk-Dienst über die Verbindung zwischen dem Benutzergerät und der Servervorrichtung.

2. Verfahren nach Anspruch 1, das ferner das Empfangen (3-9, 3-16, 3-19, 4-7, 4-15, 4-18), im Benutzergerät von der Servervorrichtung, von Ereignissen für den Push-to-Talk-Dienst umfasst, und, durch den Client im Benutzergerät, Bereitstellen des Push-to-Talk-Dienstes unter Verwendung der empfangenen Ereignisse.

3. Verfahren nach Anspruch 1 oder 2, wobei ein Ereignis für den Push-to-Talk-Dienst (PTT) mindestens ein Element der folgenden umfasst: "Gruppenzusätze", "Gesprächsanforderung", "Gespräch gewährt", "Gesprächselement", "Gesprächsfreigabe", "Gesprächsunterbrechung", "Wort ergreifen" "Gesprächsunterbrechung", "Wort ergriffen", "PTT-Deinstallation", "in der Warteschlange", "abgewiesen". und entsprechende Bestätigungen.

4. Verfahren, umfassend:
Bereitstellen einer Servervorrichtung mit einer Webserver-Anwendung, die dafür ausgelegt ist, einen Push-to-Talk-Dienst zu liefern, einschließlich der Berechtigungen zu sprechen und für die Sprachelement-Lieferung; und
Verwenden (206, 207), für den Push-to-Talk-Dienst über eine Verbindung zwischen der Servervorrichtung und einem Benutzergerät, eines Websocket-Protokolls mit einem Protokoll für den Push-to-Talk-Dienst, wenn eine angeforderte Verwendung des Websocket-Protokolls erfolgreich ist, und nur wenn die angeforderte Verwendung des Websocket-Protokolls misslingt, Verwenden von HTTP bei Ereignissen für den Push-to-Talk-Dienst.

5. Verfahren nach Anspruch 4, ferner umfassend
als Reaktion auf die Verwendung in der Servervorrichtung von HTTP bei Ereignissen für die Push-to-Talk-Serveranwendung, Senden (4-2, 4-3, 4-3', 4-3"), von der Servervorrichtung zum Benutzergerät, der Ereignisse, wenn das Benutzergerät eine oder mehr Gesprächsgruppen für den Push-to-Talk-Dienst anhängt.

6. Verfahren nach Anspruch 4 oder 5, wobei ein Ereignis für den Push-to-Talk-Dienst (PTT) eines der folgenden Elemente enthält: "Gruppenzusätze", "Gesprächsanforderung", "Gespräch gewährt", "Gesprächselement", "Gesprächsfreigabe", "Gesprächsunterbrechung", "Wort ergreifen" "Gesprächsunterbrechung", "Wort ergriffen", "PTT-Deinstallation", "in der Warteschlange", "abgewiesen". und entsprechende Bestätigungen.

7. Computerprogrammprodukt, das Computerprogrammcode enthält, der dafür ausgelegt ist, ein Verfahren auszuführen, wie in einem der Ansprüche 1 bis 6 beansprucht, wenn er in einem Gerät ausgeführt wird.

8. Vorrichtung, die Mittel zum Ausführen eines Verfahrens nach einem der Ansprüche 1 bis 6 umfasst.

9. System (100), das dafür ausgelegt ist, einen Push-to-Talk-Dienst als eine betriebssystemunabhängige Webservice-Anwendung zu implementieren, die eine Servervorrichtung (120) umfasst, welche dafür ausgelegt ist, ein Verfahren nach Anspruch 4, 5 oder 6 zu implementieren, und ein oder mehr Benutzergeräte (110), die dafür ausgelegt sind, ein Verfahren nach einem der Ansprüche 1 bis 3 zu implementieren.

## Revendications

1. Procédé comprenant les étapes suivantes :
fournir à un appareil d'utilisateur un client spécialisé pour un service appuyer pour parler, le client étant un module d'extension de navigateur Web ;
fournir à une unité WebSocket (110-2) dans l'appareil d'utilisateur un protocole *Push-to-talk* (appuyer pour parler) (110-21) destiné au client ;
établir (204), au moyen du client dans l'appareil d'utilisateur, une connexion pour le service appuyer pour parler entre l'appareil d'utilisateur et un appareil serveur conçu pour fournir le service appuyer pour parler, incluant des autorisations de parler et la remise d'éléments vocaux, sous la forme d'une application de serveur Web ; et
utiliser (206, 207) la connexion établie entre l'appareil d'utilisateur et l'appareil serveur pour le service appuyer pour parler ;
déclencher, au moyen du client dans l'appareil d'utilisateur, l'utilisation d'un protocole WebSocket en demandant l'utilisation du protocole WebSocket à l'appareil serveur ;
si l'utilisation du protocole WebSocket réussit, utiliser le protocole WebSocket pour le service appuyer pour parler via la connexion entre l'appareil d'utilisateur et l'appareil serveur ; et
si l'utilisation du protocole WebSocket échoue, utiliser un protocole HTTP pour le service appuyer pour parler via la connexion entre l'appareil d'utilisateur et l'appareil serveur.

2. Procédé selon la revendication 1, comprenant en outre la réception (3-9, 3-16, 3-19, 4-7, 4-15, 4-18) dans l'appareil d'utilisateur, en provenance de l'appareil serveur, d'événements destinés au service appuyer pour parler, et la fourniture, au moyen du client dans l'appareil d'utilisateur, du service appuyer pour parler à l'aide des événements reçus.

3. Procédé selon la revendication 1 ou 2, dans lequel un événement destiné au service appuyer pour parler (push to talk, PTT) inclut au moins l'un des événements suivants : « rattachements à des groupes », « demande de prise de parole », « prise de parole accepté », « élément vocal », « parole rendue », « interruption de prise de parole », « prise de parole », « fin d'utilisation de PTT », « mise en file d'attente », « Refus » et les accusés de réception correspondants.

4. Procédé comprenant les étapes suivantes :
fournir à un appareil serveur une application de serveur Web conçue pour fournir un service appuyer pour parler, incluant des autorisations de parler et la remise d'éléments vocaux ; et
utiliser (206, 207) aux fins du service appuyer pour parler via une connexion entre l'appareil serveur et un appareil d'utilisateur un protocole WebSocket avec un protocole *Push-to-talk* pour le service appuyer pour parler, si une utilisation demandée du protocole WebSocket réussit, et seulement si l'utilisation demandée du protocole WebSocket échoue, utiliser le protocole HTTP avec des événements destinés au service appuyer pour parler.

5. Procédé selon la revendication 4, comprenant en outre l'étape suivante :
en réponse à l'utilisation dans l'appareil serveur, du protocole HTTP avec des événements destinés à l'application de serveur Web appuyer pour parler, envoyer (4-2, 4-3, 4-3', 4-3") de l'appareil serveur à l'appareil d'utilisateur les événements, lorsque l'appareil d'utilisateur se rattache à un ou plusieurs groupe(s) de discussion aux fins du service appuyer pour parler.

6. Procédé selon la revendication 4 ou 5, dans lequel un événement destiné au service appuyer pour parler (push to talk, PTT) inclut l'un des événements suivants : « rattachements à des groupes », « demande de prise de parole », « prise de parole accepté », « élément vocal », « parole rendue », « interruption de prise de parole », « prise de parole », « fin d'utilisation de PTT », « mise en file d'attente », « Refus » et les accusés de réception correspondants.

7. Produit-programme informatique comprenant un code de programme informatique conçu pour réaliser un procédé tel que revendiqué dans l'une quelconque des revendications 1 à 6, lorsqu'il est exécuté sur un appareil.

8. Appareil comprenant des moyens destinés à réaliser un procédé tel que revendiqué dans l'une quelconque des revendications 1 à 6.

9. Système (100) conçu pour mettre en oeuvre un service appuyer pour parler sous la forme d'une application de service Web à système d'exploitation indépendant, comprenant un appareil serveur (120) conçu pour mettre en oeuvre un procédé tel que revendiqué dans la revendication 4, 5 ou 6 et un ou plusieurs appareil(s) d'utilisateur(s) (110) conçu(s) pour mettre en oeuvre un procédé tel que revendiqué dans l'une quelconque des revendications 1 à 3.
